# EUROPEAN PATENT SPECIFICATION

(11) **EP 3 865 341 B1**
(45) Date of publication and mention of the grant of the patent: **16.10.2024**
(21) Application number: 21156701.1
(22) Date of filing: 11.02.2021
(51) Int. Cl.: B60N 2/28

(54) **CHILD RESTRAINT SYSTEM AND ITS METHOD OF USE**
KINDERRÜCKHALTESYSTEM UND SEINE VERWENDUNGSVERFAHREN
SYSTÈME DE RETENUE POUR ENFANTS ET SA MÉTHODE D'UTILISATION

(30) Priority: 13.02.2020 PT 2020011932
(43) Date of publication of application: 18.08.2021
(73) Proprietor: BÉBÉCAR - Utilidades para Criança, S.A., 4509-903 Caldas de S. Jorge (PT)
(72) Inventor: SANTOS, EMANUEL FERNANDO OLIVEIRA, 4505-685 CALDAS DE S. JORGE (PT); FERREIRA, VALDEMAR ANTUNES CARVALHO, 4520-615 SÃO JOÃO DE VÊR (PT)
(74) Representative: Pereira da Cruz, Joao

(56) References cited:
- EP-A1- 3 165 400
- EP-B1- 3 165 400
- US-A1- 2016 144 749
- US-A1- 2017 166 097

## Description

### SCOPE AND BACKGROUND OF THE INVENTION

The present invention falls within the scope of removable seats for vehicles, relating in particular to a child restraint system (1) for use in car seats aimed at carrying children in vehicles or strollers, and to the method of use thereof. More particularly, the child restraint system (1), which is the subject of this invention, makes it possible to adjust the position of the restraint system (1), alternating between lying and sitting positions, in restraint systems of the group 0 and 0+, suitable for children up to 13 kg (28 lb) and age from 0 to 15 months, depending on their size.

The child restraint systems available on the market, which are intended for the carriage of very young children, new-born babies and children up to 15 months, are static in as much as the position of the child inside the restraint system is always the same.

More specifically, some child restraint systems provided with a built-in adjustment are known to be used for the carriage of children in vehicles but, however, none of these systems has a system which is independent of the main chassis and which operates by actuating only on a support platform that accommodates the child. The said restraint systems allow for a more or less automatic adjustment of the position, essentially consisting of a chassis that pivots on itself for adjusting the reclining angle of the child. In fact, in these cases, it is possible to place the child in a more reclined position in relation to the vehicle, however, his/her position inside the restraint system is generally one which is close to the seated position, not being possible to place a new-born baby in a more comfortable and age-appropriate position, i.e., in the lie down position.

The aforementioned issues arise from the fact that these restraint systems are often used for periods which are longer than those approved by the regulatory authorities in what concerns the use of these systems, while their use should not exceed two hours. Due to the comfort offered by these systems, as well as the protection, the nest sensation provided to the child, and its easy manoeuvrability, it is common to see them being used not only in the car, but also in long pedestrian walks, even though it is totally inadvisable.

Documents US201/166097A1 and EP3165400A1 disclose a child safety seat with a base and a seat part, the seat part including a back portion and a sitting portion, which are movably disposed on the base and are pivotally connected with each other, however it differs from the present invention is such way that does not comprise three pivotally connected portions from the head until the feet that provides a position close to the lying position.

Document US2016/144749A1 discloses a child safety seat including a base, a raising mechanism, a back rest and a headrest, the raising mechanism comprising a a) front raising block connected to the base, a b) rear raising, these blocks forming a sitting portion and a c) driving member, the driving member drives the blocks to raise the sitting portion, to a sitting position. These document differs from the present invention is such way that does not comprise three pivotally connected portions from the head until the feet that provides a position close to the lying position, instead it provides a system which drives to a sitting position.

The present invention is intended to be a child restraint system, preferably of the group 0+ or from 40 to 80 cm, according to the Regulation on the Use of Safety Accessories, which ensures the possibility of the child to alternate between a seated position in a 100° angle and a lie down position in a 160° angle, thus solving the problem of the positioning of very young children and avoiding to keep them always in the same position, i.e., close to the seated position, when in the restraint system.

### SUMMARY OF THE INVENTION

It is therefore an object of the present invention a child restraint system (1) which allows adjusting of the position of the child restraint system (1) by alternating between higher and lower amplitude, corresponding to a lie down position and a seated position of the child, respectively, within the child restraint system (1) independently of a chassis (2) of the child restraint system (1) .

The child restraint system (1) is provided with a chassis (2) comprising a hinged platform (3) for accommodating the child, which is expandable between at least two positions of higher and lower amplitude.

Thus, the fact that the platform (3) is hinged allows it to change its configuration, which then reflects in the child's position. The higher and lower amplitude positions of the platform (3) correspond to the child's seated position, when the platform (3) is in the lower amplitude position, and to a lie down or close to a lie down position, when the platform (3) is in the higher amplitude position.

On its turn, the platform (3) is hinged in at least three parts:
a) an upper part (6) coinciding with the head and torso;
b) a middle part (7) coinciding with the lower torso; and
c) a lower part (8) coinciding with the lower limbs.

The restraint system (1) further comprises a slide system (4) comprising at least two pairs of profiles (5) and (10) which are complementary and fit together by sliding, one pair of profiles (5) being located in a lower inner part of the chassis (2) and the other pair of profiles (10) being located in the lower part (8) of the platform (3) so that the slide system (4) engages thereon.

It is important to explain that the pairs of profiles (5) and (10) are parallel to each other and are arranged laterally on the part corresponding to the support of the child's lower limbs, i.e., one pair of profiles (5) is on each side on the inner part of the chassis (2) and the other pair (10) is on the inner part of the lower part (8) of the platform (3) in such a way that the pairs of profiles (5) and (10) fit into each other respectively, i.e. the slide system (4) is fitted, the slide system (4) being the connection of the lower part (8) to the chassis (2).

When the platform (3) is in a lower amplitude position, it is hinged on itself in accordance with the inner configuration of the chassis (2), thus being in a rest position, which means the upper part (6), the middle part (7) and the lower part (8) are retracted, not tensioned.

When the platform (3) is in a higher amplitude position, it is stretched on the chassis (2), i.e. the upper part (6), the middle part (7), the lower part (8) are tensioned.

This configuration of the platform (3) in a higher amplitude position is made possible by moving the lower part (8) and consecutively fixing the slide system (4) to the notch (11) of the slide system (4). The notch (11) allows the slide system (4) to be fixed when the child is to remain in the lie down or close to the lie down position.

Additionally, the child restraint system (1) is coated with a padded-type material or any other comfortable material and comprises at least one displacement flap of the lower part (8) for adjustment of the sitting or lying position.

It is also an object of the present invention a method of use of the said child restraint system (1), comprising the following steps:
a) pull at least one displacement flap of the lower part (8) until it fits into the notch (11) in such a way that the platform (3) is in a higher amplitude position, i.e. the lying position of the child;
b) pull at least one displacement flap of the lower part (8) until it disengages from the notch (11);
c) pull at least one displacement flap of the lower part (8) in such a way that the platform (3) retracts by hinging on itself to a position of lower amplitude, i.e. the sitting position of the child.

### DESCRIPTION OF THE FIGURES

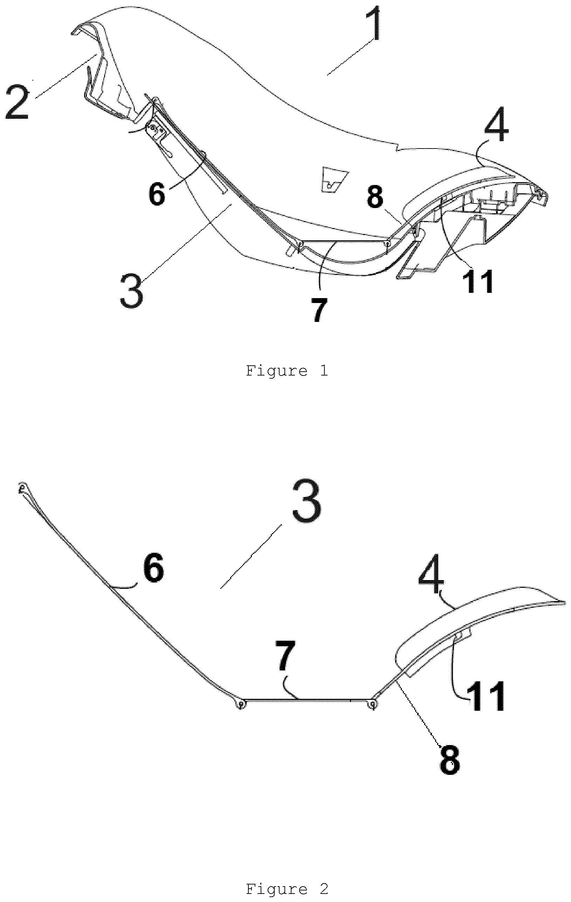

Figure 1 - schematic representation of the child restraint system (1) in a lower amplitude position, presenting a chassis (2), a platform (3) hinged on the chassis (2), the platform (3) comprising an upper part (6) connected to the chassis (2), a middle part (7) and a lower part (8), the lower part (8) movable by means of a slide system (4) containing a notch (11).
Figure 2 - schematic representation of the platform (3) in a lower amplitude position, presenting an upper part (6), a middle part (7) and a lower part (8), the lower part (8) movable by means of a slide system (4) containing a notch (11) .

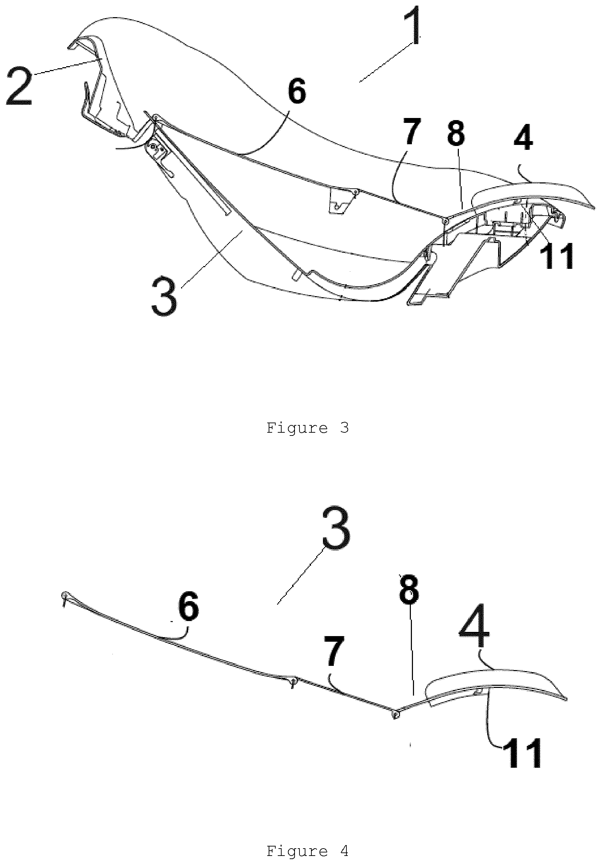

Figure 3 - schematic representation of the child restraint system (1) in a higher amplitude position, presenting a chassis (2), a platform (3) hinged on the chassis (2), the platform (3) comprising an upper (6), a middle (7) and a lower part (8), the lower part (8) movable by means of a slide system (4) containing a notch (11).
Figure 4 - schematic representation of the platform (3) in a higher amplitude position, presenting an upper part (6), a middle part (7) and a lower part (8), the lower part (8) movable by means of a slide system (4) containing a notch (11) .

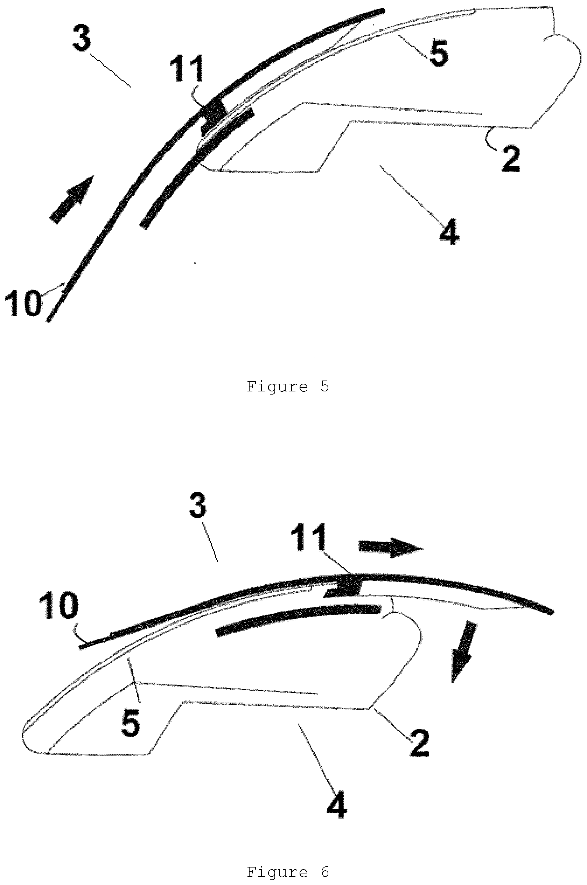

Figure 5 - illustrates a cross-section view of the slide system (4) when the platform (3) is in a lower amplitude position, comprising at least two female profiles (10) slidable on at least two male profiles (5) of the chassis (2), each female profile (10) comprising at least one notch (11) for engaging the male profile (5).
Figure 6 - illustrates a cross-section view of the slide system (4) when the platform (3) is in a position close to the position of greatest amplitude, comprising at least two female profiles (10) slidable on at least two male profiles (5) of the chassis (2), each female profile (10) comprising at least one notch (11) for engaging the male profile (5).

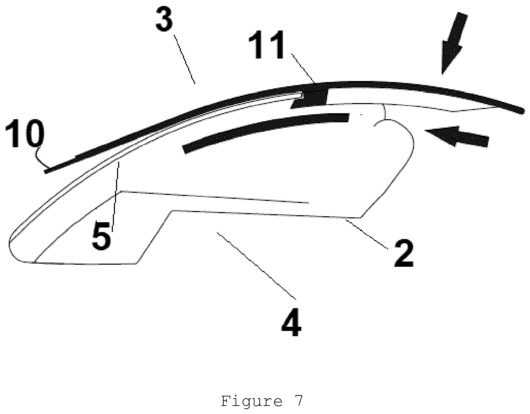

Figure 7 - illustrates a cross-section view of the slide system (4) when the platform (3) is in a higher amplitude position, by fitting the notch (11) of the female profile (10) onto the male profile (5) of the chassis (2).

### DETAILED DESCRIPTION OF THE INVENTION

Once the child restraint system (1) and its method of use have been described, preferred embodiments of the invention are now disclosed.

Details of the various configurations of the restraint system (1) and of the operation of the slide system (4) when the platform (3) is, respectively, in the positions of higher and lower amplitude, are now to be provided.

Thus, in a preferred embodiment of the invention, when the platform (3) is in a lower amplitude position, the upper part (6) and the middle part (7) form an angle between 95° and 105° with respect to each other. When the platform (3) is in a higher amplitude position, the upper part (6) and the middle part (7) form an angle between 155° and 165° relative to the lower part (8), so that the angles formed provide a sitting and a lying position of the child, respectively.

In another preferred embodiment of the invention, the pair of profiles (5) is of the male type for fitting to the pair of profiles (10), the latter being of the female type. The male type profiles (5) and the female type profiles (10) enable easy engagement of the slide system (4) in addition to providing easy mounting on the retention system (1). These types of profiles ensure an efficient sliding of the slide system.

Additionally, the notch (11) is located in each female profile (10) of the pair of female profiles (10) to engage the male profile (5) when the platform (3) is in a higher amplitude position.

In a preferred embodiment of the present invention, the middle part (7) is made of a flexible and resistant material, preferably reinforced malleable fabric.

The fact that the middle part (7) is made of a flexible material allows a better adaptation of the platform (3) when retracted on the chassis (2), i.e. when the platform (3) is in a lower amplitude position. Simultaneously, the fact that the material is malleable allows the platform (3) to extend, when it is in the greatest amplitude position, without compromising the lifespan of the connections between the three parts and the materials that constitute them, in addition to conferring greater comfort and adaptation to the anatomy of the child.

In another preferred embodiment of the invention, the platform (3) is articulable by means of hinges, seams, crimping or any other means of articulable connection, in such a way that the connections between the various elements are not fixed, but articulable, ensuring the movement of the platform (3).

The upper part (6) of the platform (3) is connected to the chassis (2) by means of hinges, seams, crimping or any other means of articulable connection, so as to ensure an articulable connection, guaranteeing the movement of the platform (3) as well as the position of greatest amplitude.

In yet another preferred embodiment of the invention, the platform (3) has perforations in order to allow the seat belts of the restraint system to be passed through them.

In another embodiment of the invention, the lower part (8) presents a plurality of perforations distributed on its surface. The presence of the perforations reduces the amount of material required for its manufacture, as well as its weight, thus facilitating its movement on the slide system (4).

In another embodiment of the present invention, the upper part (6) and lower part (8) are made of a rigid and resistant material, preferably polyamide or polypropylene.

## Claims

1. Child restraint system (1) comprising:
a) a chassis (2) provided with a hinged platform(3) **characterized in that** it comprises at least three parts:
i. an upper part (6);
ii. a middle part (7); and
iii. a lower part (8);
the platform (3) being extendable between at least two positions of higher and lower amplitude; and
b) a slide system (4) consisting of at least two pairs of profiles (5) and (10) that are complementary and fit together by sliding, one pair of profiles (5) being located in a lower inner part of the chassis (2) and the other pair of profiles (10) being located in the lower part (8) of the platform (3), in such a way that the slide system (4) engages, whereby when the platform (3) is in a higher amplitude position, the lower part (8) moves and the slide system (4) is fixed in a notch (11).

2. A restraint system (1) according to the previous claim, **characterized in that** the upper part (6) and the middle part (7) form an angle between 95° and 105° with respect to each other, when the platform (3) is in the lower amplitude position.

3. A restraint system (1) according to the previous claims, **characterized in that** the upper part (6) and the middle part (7) form an angle between 155° and 165° relative to the lower part (8) when the platform (3) is in a higher amplitude position.

4. A restraint system (1) according to the previous claims, **characterized in that** the pair of profiles (5) are of the male type (5) and the pair of profiles (10) are of the female type (10).

5. A restraint system (1) according to the previous claims, **characterized in that** the pair of profiles of the female type (10) comprises a notch (11) to engage in the pair of profiles of the male type (5).

6. A child restraint system (1) according to the claim 1 above, **characterized in that** the middle part (7) is made of a flexible and resistant material, preferably reinforced malleable fabric.

7. A child restraint system (1) according to any of the previous claims, **characterized in that** the platform (3) is articulable by means of hinges, seams, crimping or any other means of articulable connection.

8. A child restraint system (1) according to any of the previous claims, **characterized in that** the upper part (6) is connected to the chassis (2) by means of hinges, seams, crimping or any other means of articulable connection.

9. A child restraint system (1) according to any of the previous claims, **characterized in that** the lower part (8) presents a plurality of perforations distributed on its surface.

10. A child restraint system (1) according to any of the previous claims, **characterized in that** the platform (3) has perforations in order to allow the seat belts of the restraint system to be passed through them.

11. A child restraint system (1) according to any of the previous claims, **characterized in that** the upper part (6) and the lower part (8) are made of a rigid and resistant material, preferably polyamide or polypropylene.

12. A child restraint system (1) according to any of the previous claims, **characterized in that** it is coated with a padded-type material or any other comfortable material and comprises at least one displacement flap of the lower part (8).

13. Method of use of the child restraint system disclosed in claims 1 to 12, **characterized in that** it comprises the following steps:
a) pull at least one displacement flap of the lower part (8) until it fits into the notch (11) in such a way that the platform (3) is in a higher amplitude position;
b) pull at least one displacement flap of the lower part (8) until it disengages from the notch (11);
c) pull at least one displacement flap of the lower part (8) in such a way that the platform (3) retracts by hinging on itself to a position of lower amplitude.

## Patentansprüche

1. Kinderrückhaltesystem (1) umfassend:
a) ein Chassis (2), das mit einer klappbaren Plattform (3) versehen ist, **dadurch gekennzeichnet, dass** es mindestens drei Teile umfasst:
i. ein Oberteil (6);
ii. ein Mittelteil (7); und
iii. ein Unterteil (8);
wobei die Plattform (3) zwischen mindestens zwei Positionen mit höherer und niedrigerer Amplitude ausfahrbar ist; und
b) ein Gleitsystem (4), das aus mindestens zwei Paaren von Profilen (5) und (10) besteht, die komplementär sind und durch Gleiten zusammenpassen, wobei ein Paar von Profilen (5) in einem unteren Innenteil des Chassis (2) angeordnet ist und das andere Paar von Profilen (10) in Unterteil (8) der Plattform (3) angeordnet ist, so dass das Gleitsystem (4) eingreift, wodurch, wenn sich die Plattform (3) in einer Position mit höherer Amplitude befindet, sich der untere Teil (8) bewegt und das Gleitsystem (4) in einer Aussparung (11) fixiert ist.

2. Rückhaltesystem (1) nach dem vorhergehenden Anspruch, **dadurch gekennzeichnet, dass** das Oberteil (6) und das Mittelteil (7) einen Winkel zwischen 95° und 105° zueinander bilden, wenn sich die Plattform (3) in der Position mit niedrigerer Amplitude befindet.

3. Rückhaltesystem (1) nach den vorhergehenden Ansprüchen, **dadurch gekennzeichnet, dass** das Oberteil (6) und das Mittelteil (7) einen Winkel zwischen 155° und 165° zum unteren Teil (8) bilden, wenn sich die Plattform (3) in einer Position mit höherer Amplitude befindet.

4. Rückhaltesystem (1) nach den vorhergehenden Ansprüchen, **dadurch gekennzeichnet, dass** das Paar von Profilen (5) vom männlichen Typ (5) und das Paar von Profilen (10) vom weiblichen Typ (10) sind.

5. Rückhaltesystem (1) nach den vorhergehenden Ansprüchen, **dadurch gekennzeichnet, dass** das Paar von Profilen des weiblichen Typs (10) eine Aussparung (11) zum Eingreifen in das Paar von Profilen des männlichen Typs (5) aufweist.

6. Kinderrückhaltesystem (1) nach dem vorhergehenden Anspruch 1, **dadurch gekennzeichnet, dass** der Mittelteil (7) aus einem flexiblen und widerstandsfähigen Material, vorzugsweise aus verstärktem, verformbarem Gewebe, hergestellt ist.

7. Kinderrückhaltesystem (1) nach einem der vorhergehenden Ansprüche, **dadurch gekennzeichnet, dass** die Plattform (3) mittels Scharnieren, Nähten, Crimpen oder jeder anderen Mitteln zur gelenkigen Verbindung gelenkig beweglich ist.

8. Kinderrückhaltesystem (1) nach einem der vorhergehenden Ansprüche, **dadurch gekennzeichnet, dass** das Oberteil (6) mit dem Chassis (2) mittels Scharnieren, Nähten, Crimpen oder jeder Mitteln zur gelenkigen Verbindung verbunden ist.

9. Kinderrückhaltesystem (1) nach einem der vorhergehenden Ansprüche, **dadurch gekennzeichnet, dass** das Unterteil (8) eine Vielzahl von auf seiner Oberfläche verteilten Perforationen aufweist.

10. Kinderrückhaltesystem (1) nach einem der vorhergehenden Ansprüche, **dadurch gekennzeichnet, dass** die Plattform (3) Perforationen aufweist, damit die Sicherheitsgurte des Rückhaltesystems durch sie hindurchgeführt werden können.

11. Kinderrückhaltesystem (1) nach einem der vorhergehenden Ansprüche, **dadurch gekennzeichnet, dass** das Oberteil (6) und das Unterteil (8) aus einem starren und widerstandsfähigen Material, vorzugsweise Polyamid oder Polypropylen, hergestellt sind.

12. Kinderrückhaltesystem (1) nach einem der vorhergehenden Ansprüche, **dadurch gekennzeichnet, dass** es mit einem polsterartigen Material oder einem anderen bequemen Material überzogen ist und mindestens eine Verdrängungsklappe des Unterteils (8) aufweist.

13. Verfahren zur Verwendung des in den Ansprüchen 1 bis 12 offenbarten Kinderrückhaltesystems, **dadurch gekennzeichnet, dass** es die folgenden Schritte umfasst:
a) Ziehen von mindestens eine Verdrängungsklappe des Unterteils (8), bis sie in die Aussparung (11) passt, so dass sich die Plattform (3) in einer Position mit höherer Amplitude befindet;
b) Ziehen von mindestens einer Verdrängungsklappe des Unterteils (8), bis sie aus der Aussparung (11) löst;
c) Ziehen von mindestens eine Verdrängungsklappe des Unterteils (8), so dass sich die Plattform (3) durch Aufklappen auf sich selbst in eine Position mit geringerer Amplitude zurückfährt.

## Revendications

1. Système de retenue pour enfants (1) comprenant :
a) un châssis (2) muni d'une plate-forme articulée (3) **caractérisé en ce qu'**il comprend au moins trois parties :
i. une partie supérieure (6);
ii. une partie médiane (7); et
iii. une partie inférieure (8);
la plate-forme (3) étant extensible entre au moins deux positions d' amplitude plus élevée et moins élevée; et
b) un système de glissière (4) constitué d'au moins deux paires de profilés (5) et (10) complémentaires et s'emboîtant par glissement, une paire de profilés (5) étant située dans une partie intérieure inférieure du châssis (2) et l'autre paire de profilés (10) étant située dans la partie inférieure (8) de la plate-forme (3), de telle sorte que le système de glissière (4) s'engage, ce qui fait que lorsque la plate-forme (3) est dans une position d'amplitude plus élevée, la partie inférieure (8) se déplace et le système de glissière (4) est fixé dans une encoche (11).

2. Système de retenue (1) selon la revendication précédente, **caractérisé en ce que** la partie supérieure (6) et la partie médiane (7) forment un angle compris entre 95° et 105° l'une par rapport à l'autre, lorsque la plate-forme (3) est dans la position d'amplitude moins élevée.

3. Système de retenue (1) selon les revendications précédentes, **caractérisé en ce que** la partie supérieure (6) et la partie médiane (7) forment un angle compris entre 155° et 165° par rapport à la partie inférieure (8), lorsque la plate-forme (3) est dans une position d'amplitude plus élevée.

4. Système de retenue (1) selon les revendications précédentes, **caractérisé en ce que** la paire de profils (5) est du type mâle (5) et la paire de profils (10) est du type femelle (10).

5. Système de retenue (1) selon les revendications précédentes, **caractérisé en ce que** la paire de profilés du type femelle (10) comprend une encoche (11) pour s'engager dans la paire de profilés du type mâle (5).

6. Système de retenue pour enfants (1) selon la revendication 1 ci-dessus, **caractérisé en ce que** la partie médiane (7) est faite d'un matériau souple et résistant, de préférence d'un tissu malléable renforcé.

7. Système de retenue pour enfants (1) selon l'une quelconque des revendications précédentes, **caractérisé en ce que** la plate-forme (3) est articulée au moyen de charnières, de coutures, de sertissages ou de tout autre moyen de liaison articulée.

8. Système de retenue pour enfants (1) selon l'une quelconque des revendications précédentes, **caractérisé en ce que** la partie supérieure (6) est reliée au châssis (2) au moyen de charnières, de coutures, de sertissages ou de tout autre moyen de liaison articulé.

9. Système de retenue pour enfant (1) selon l'une quelconque des revendications précédentes, **caractérisé en ce que** la partie inférieure (8) présente une pluralité de perforations réparties sur sa surface.

10. Système de retenue pour enfants (1) selon l'une quelconque des revendications précédentes, **caractérisé en ce que** la plate-forme (3) comporte des perforations permettant de faire passer les ceintures de sécurité du système de retenue.

11. Système de retenue pour enfants (1) selon l'une quelconque des revendications précédentes, **caractérisé en ce que** la partie supérieure (6) et la partie inférieure (8) sont réalisées dans un matériau rigide et résistant, de préférence en polyamide ou en polypropylène.

12. Système de retenue pour enfants (1) selon l'une quelconque des revendications précédentes, **caractérisé en ce qu'**il est revêtu d'un matériau de type matelassé ou de tout autre matériau confortable, et comprend au moins un volet de déplacement de la partie inférieure (8).

13. Méthode d'utilisation du système de retenue pour enfants divulgué dans les revendications 1 à 12, **caractérisée en ce qu'**elle comprend les étapes suivantes :
a) tirer au moins un volet de déplacement de la partie inférieure (8) jusqu'à ce qu'il s'insère dans l'encoche (11) de manière à ce que la plate-forme (3) soit dans une position d'amplitude plus élevée;
b) tirer au moins un volet de déplacement de la partie inférieure (8) jusqu'à ce qu'il se dégage de l'encoche (11);
c) tirer au moins un volet de déplacement de la partie inférieure (8) de manière à ce que la plate-forme (3) se rétracte en s'articulant sur elle-même jusqu'à une position d'amplitude moins élevée.
